# EUROPEAN PATENT APPLICATION

(11) **EP 4 170 533 A1**
(43) Date of publication of application: **26.04.2023**
(21) Application number: 20944810.9
(22) Date of filing: 08.07.2020
(51) Int. Cl.: G06F 21/62

(54) **HIGH-PRECISION MAP, HIGH-PRECISION MAP GENERATING METHOD, AND USAGE METHOD**

(71) Applicant: Huawei Technologies Co., Ltd., Longgang District, Shenzhen, Guangdong 518129 (CN)
(72) Inventor: LV, Tao, Shenzhen, Guangdong 518129 (CN); LI, Ming, Shenzhen, Guangdong 518129 (CN)
(74) Representative: Isarpatent
(86) International application number: PCT/CN2020/100746
(87) International publication number: WO 2022/006761

(57) **Abstract**

A high-definition map (110) generation method, a high-definition map (110) generated according to the method, and a high-definition map (110) usage method are provided, and relate to the autonomous driving field in the artificial intelligence field. In a high-definition map (110) generation process, the high-definition map (110) is split into general data and sensitive data, and the general data and the sensitive data have a same map element ID, so that the high-definition map (110) can be split by categories, and separately or collectively stored based on a split data type. The general data is obtained according to a general map data usage method, and single-point object output is provided for the sensitive data. Service parties (22 and 32) may request and obtain sensitive data of a single-point object based on a specific service requirement.

## Description

### TECHNICAL FIELD

This application relates to the fields of navigation and autonomous driving, and in particular, to a high-definition map and a high-definition map generation method and usage method.

### BACKGROUND

With rapid development of 5G communications and Internet of Vehicles technologies, an autonomous driving technology has become a research hot topic. Core technologies in the autonomous driving field include intelligent environment awareness, automatic navigation and positioning, driving behavior decision-making, intelligent path planning control, and the like. In the autonomous driving technology, a high-definition map is an important infrastructure and premise for implementing autonomous driving. Compared with a conventional map, precision of the high-definition map can reach a centimeter level, and includes multidimensional high-definition data such as curvature, an elevation, a gradient, coordinates of a road, and height data of a bridge and a tunnel. The high-definition map can provide accurate navigation for a vehicle, and is an indispensable key component in autonomous driving.

Based on existing laws in China, especially the Surveying and Mapping Law, sensitive data related to national security in a high-definition map cannot be disclosed or held by an unqualified subject. Generally speaking, in fields such as maps and surveying and mapping, data that cannot be disclosed as specified in the national laws is referred to as sensitive data, and data that can be disclosed as specified in the national laws is referred to as general data. At present, there are only a dozen subjects with A-level surveying and mapping qualifications in China. In a process of navigating a vehicle by using a high-definition map, some sensitive data (for example, a height of a bridge) is inevitably used. If a large amount of sensitive data is held by a user for a long time, there is a conflict with a current law regulation. Therefore, this problem poses a severe challenge to popularization of the high-definition map for navigation in autonomous driving.

### SUMMARY

To resolve the foregoing problem, embodiments of this application provide a high-definition map generation method, a high-definition map generated according to the method, and a high-definition map usage method.

As a first aspect of this application, an embodiment of this application provides a high-definition map usage method. The method may be implemented by a map service providing side. The method may specifically include: first, splitting a high-definition map into general data and sensitive data, and storing the sensitive data on a dedicated server side; when receiving a request from a service party, transmitting the general data to the service party, and if the request from the service party includes a request for the sensitive data, transmitting sensitive data of a single-point object to the service party, where the single-point object includes a single map element on the high-definition map; and deleting the sensitive data from the service party after the service party finishes using the sensitive data, where the general data includes data that can be disclosed according to the law, and the sensitive data includes data that cannot be disclosed according to the law; and the dedicated server side includes a server authorized by a regulatory authority and a cloud service authorized by the regulatory authority.

According to the method provided in this embodiment of this application, a high-definition map is split into general data and sensitive data, and the sensitive data is stored at a secure dedicated server side. In this way, when the high-definition map is used for navigation, sensitive data of a single-point object is provided to a service party based on a specific requirement of the service party, and the sensitive data is deleted after the service party finishes using the sensitive data, thereby preventing the service party from obtaining and holding a large amount of sensitive data for a long time, so that a compliance problem of the high-definition map applied to autonomous driving can be solved.

With reference to a possible implementation of the first aspect, the sensitive data includes geographical information that is a state secret and that is stipulated by the law. It should be understood that the foregoing scope may change with an amendment to the law.

With reference to a possible implementation of the first aspect, the dedicated server side includes a dedicated server and a dedicated cloud. The dedicated server may be, for example, a server of a service provider authorized by a government regulatory authority. Similarly, the dedicated cloud may be a cloud service provided by a cloud computing service provider for the service provider authorized by the government regulatory authority.

With reference to a possible implementation of the first aspect, the map element includes an identifier ID (Identifier), and the service party requests the sensitive data of the single-point object based on the ID of the map element.

With reference to a possible implementation of the first aspect, the service party includes a vehicle end and a mobile terminal, the vehicle end may include an autonomous vehicle, for example, various autonomous vehicles that are graded as L1-L5 according to the SAE (Society of Automotive Engineers), and the mobile terminal includes a mobile phone, a laptop computer, an IoT device, and the like.

According to a second aspect, a high-definition map usage method is provided, where the method may be implemented by a service party. The service party requests high-definition map data from a server side based on a service requirement, the high-definition map data includes general data and sensitive data, the server side includes a dedicated server side, and the dedicated server side is configured to store the sensitive data. The general data is received from the server side, and the sensitive data is received from the dedicated server side. The sensitive data is deleted after use of the sensitive data is finished. The general data includes data that can be disclosed according to the law, and the sensitive data includes data that cannot be disclosed according to the law. The dedicated server side includes a server authorized by a regulatory authority and a cloud service authorized by the regulatory authority.

It may be understood that the method provided in the second aspect may cooperate with and correspond to the method provided in the first aspect. Therefore, for implementations of the second aspect and technical effects achieved, refer to related descriptions of the implementations of the first aspect.

According to a third aspect, a high-definition map generation system is provided, where the system may be disposed on a map service providing side, and is configured to generate and manage a high-definition map. The high-definition map generation system includes: a surveying and mapping data processing module, where the surveying and mapping data processing module is configured to process original surveying and mapping data to obtain processed surveying and mapping data; a map data generation module, where the map data generation module is configured to generate a map element based on the processed surveying and mapping data, and each map element includes a unique ID corresponding to the map element; a data splitting module, where the map data splitting module is configured to split data of the map element into general data and sensitive data based on the map element ID; and a map data management module, where the map data management module is configured to provide single-interface output for the sensitive data in the map element. The system may generate a high-definition map, and the high-definition map may provide the single-interface output for the sensitive data, so that the sensitive data can be separately managed.

With reference to a possible implementation of the third aspect, the map data management module further includes a general data interface configured to output the general data. For a common service requirement that does not involve the sensitive data, only the general data is required. Therefore, the general data can be output through the general data interface.

With reference to a possible implementation of the third aspect, the single-interface output includes an SDK (Software Development Kit). Through interface output of the SDK, the sensitive data can be deleted by a data provider after being used.

According to a fourth aspect, a high-definition map invocation system is provided, where the system may be disposed on a service party, including: a map downloading module, where the map downloading module is configured to download general data, and the map downloading module includes a general data interface configured to obtain the general data; a service processing module, where the service processing module is configured to determine required sensitive data based on a navigation plan, and the service processing module includes a sensitive data interface configured to obtain the sensitive data; and a sensitive data deleting module, where the sensitive data deleting module is communicatively connected to the service processing module, and the sensitive data deleting module is configured to delete the sensitive data after use of the sensitive data is finished. The general data includes data that can be disclosed according to the law, and the sensitive data includes data that cannot be disclosed according to the law. A dedicated server side includes a server authorized by a regulatory authority and a cloud service authorized by the regulatory authority.

It may be understood that the system provided in the fourth aspect may cooperate with and correspond to the system provided in the third aspect. Therefore, for implementations of the fourth aspect and technical effects achieved, refer to related descriptions of the implementations of the third aspect.

According to a fifth aspect, a high-definition map is provided, including a plurality of map elements, where each of the plurality of map elements includes an ID corresponding to the map element, the plurality of map elements include general data and sensitive data, and general data and sensitive data in a same map element have a same ID. The general data includes data that can be disclosed according to the law. It may be understood that, for example, the high-definition map in the fifth aspect may be generated by the high-definition map generation system in the third aspect.

With reference to a possible implementation of the third aspect, the general data and the sensitive data are configured to be stored in a split manner. For example, both the general data and the sensitive data may be stored on a dedicated server side, and the dedicated server side includes a dedicated server and a dedicated cloud. Alternatively, the general data is stored on a common server side, and the common server side includes a common server and a public cloud. The sensitive data is stored on a dedicated server side, and the dedicated server side includes a dedicated server and a dedicated cloud.

Embodiments of this application provide a high-definition map generation method, a high-definition map generated according to the method, and a high-definition map usage method. In technical solutions of this application, a high-definition map is split into general data and sensitive data in a high-definition map generation process, and the general data and the sensitive data have a same map element ID, so that the high-definition map can be split by categories, and separately or collectively stored based on a split data type. The general data is obtained according to a general map data usage method. Single-point object output is provided for the sensitive data in the technical solutions of this application. A service party may request and obtain sensitive data of a single-point object based on a specific service requirement. After use of the sensitive data is finished, the sensitive data is deleted in a timely manner. Therefore, the service party cannot have the sensitive data for a long time, and cannot have a large amount of sensitive data in a same time period. According to the technical solutions of this application, a law compliance problem of using high-definition map data in the autonomous driving field can be resolved, which greatly facilitates popularization and application of the high-definition map in the autonomous driving field.

### BRIEF DESCRIPTION OF DRAWINGS

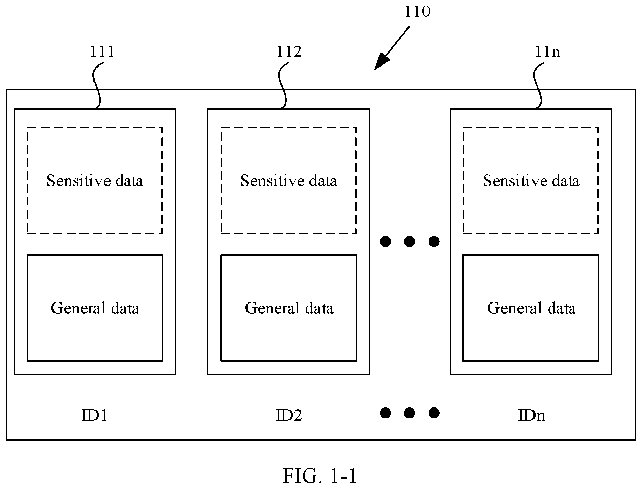

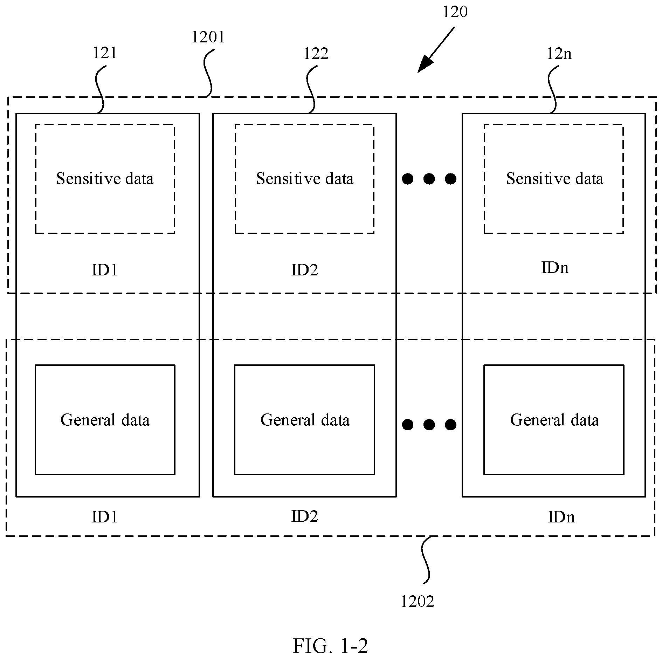

FIG. 1-1 is a schematic diagram of a high-definition map according to an embodiment of this application;
FIG. 1-2 is a schematic diagram of a high-definition map according to an embodiment of this application;
FIG. 2 is a schematic diagram of a high-definition map usage method according to an embodiment of this application;
FIG. 3 is a schematic diagram of a high-definition map usage method according to an embodiment of this application;
FIG. 4 is a schematic diagram of a high-definition map generation system and a high-definition map invocation system according to an embodiment of this application;
FIG. 5 is a flowchart of high-definition map production and service usage according to an embodiment of this application;
FIG. 6 is a flowchart of high-definition map updating and service usage according to an embodiment of this application; and
FIG. 7 is a schematic diagram of a high-definition map NDS specification.

### DESCRIPTION OF EMBODIMENTS

Embodiments of this application provide a high-definition map generation method, a high-definition map generated according to the method, and a high-definition map usage method. Based on technical solutions provided in the embodiments of this application, a law compliance risk in a process of navigating an autonomous vehicle by using a high-definition map can be eliminated, thereby facilitating popularization and application of the high-definition map in autonomous driving.

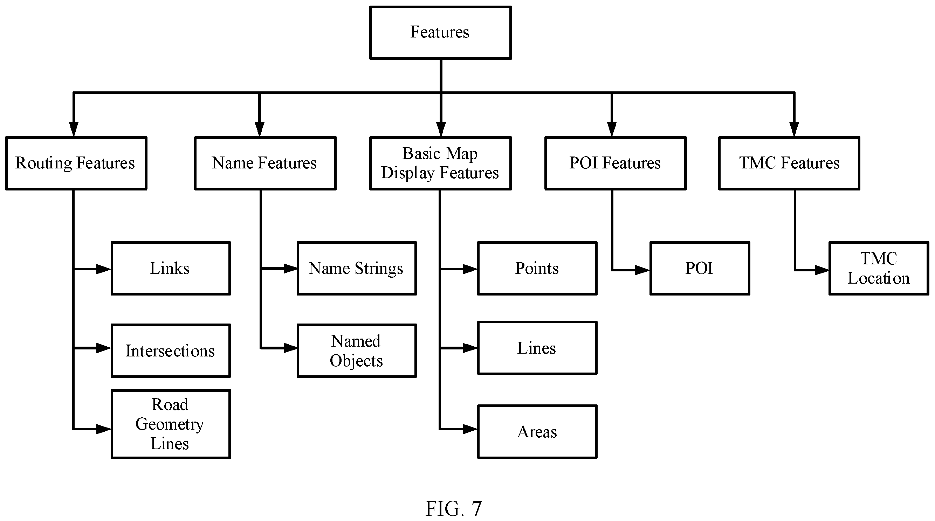

Currently, main specifications of the high-definition map include NDS and OpenDrive. FIG. 7 is a schematic diagram of the NDS specification. An object in a real world is represented by using a feature (Feature) in the high-definition map.

Detailed pseudo codes of the feature are defined as follows:

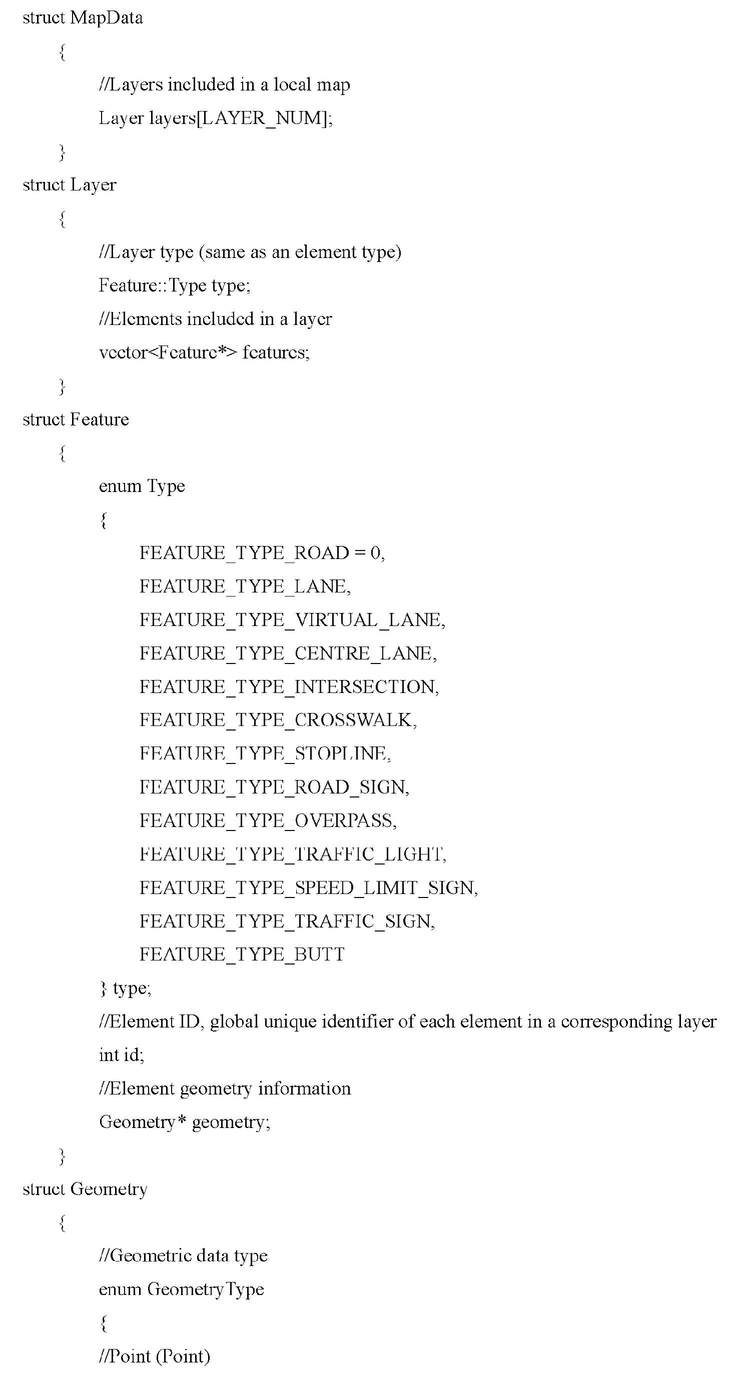

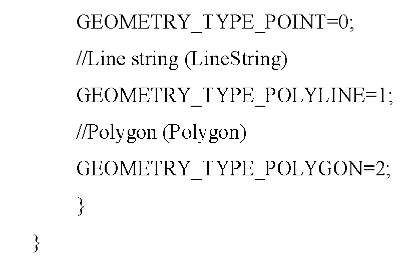

FIG. 1-1 is a schematic diagram of a high-definition map based on an embodiment of this application. The high-definition map 110 includes a plurality of map elements 111, 112, ..., and 11n, and each map element has a unique identifier ID corresponding to the map element. For the plurality of map elements 111, 112, ..., and 11n, identifier IDs corresponding to the plurality of map elements 111, 112, ..., and 11n are respectively ID1, ID2, ..., and IDn.

Map elements are elements of the high-definition map, and represent road traffic information such as roads, lane lines on roads, traffic lights, bridges, tunnels, and culverts. Each map element may include a plurality of pieces of related information, for example, a bridge as a map element may include a plurality of types of information such as a length, a height, and a gradient. One map element generally includes general data (that is, data that can be disclosed to the society based on existing laws), and may also include sensitive data (that is, data that cannot be held by an unqualified subject based on existing laws). Still using the foregoing bridge as an example, the length of the bridge is general data, and the height of the bridge is sensitive data. It should be understood that not every map element necessarily includes sensitive data, and some map elements include only general data but not sensitive data.

In some embodiments, general data and sensitive data have a same ID for one map element including the general data and the sensitive data, for example, an ID of general data and sensitive data of the map element 111 in FIG. 1 is configured as the ID1.

The high-definition map may be entirely stored on a dedicated server side, and the dedicated server side may include, for example, a dedicated server or a dedicated cloud. The dedicated server may be, for example, a server of a service provider authorized by a government regulatory authority. Similarly, the dedicated cloud may be a cloud service provided by a cloud computing service provider for the service provider authorized by the government regulatory authority.

Referring to FIG. 1-2, in some embodiments, general data and sensitive data may be separately stored in different positions. For example, general data in map elements ID1, ID2, ..., and IDn may be stored on a common server side 1202, and the common server side 1202 may be, for example, a common server or a public cloud/hybrid cloud. Sensitive data in the map elements ID1, ID2, ..., and IDn is stored on a dedicated server side 1201, and the dedicated server side 1201 may include, for example, a dedicated server or a dedicated cloud. The dedicated server may be, for example, a server of a service provider authorized by a government regulatory authority. Similarly, the dedicated cloud may be a cloud service provided by a cloud computing service provider for the service provider authorized by the government regulatory authority. It should be understood that in the embodiment shown in FIG. 1-2, general data and sensitive data have a same ID for a map element including the general data and the sensitive data.

Based on the foregoing embodiment, this application provides a high-definition map. Map elements in the high-definition map are classified into two types: general data and sensitive data. General data and sensitive data of a same map element share a same ID, and the sensitive data is stored on a dedicated server side.

The following describes in detail a high-definition map generation and usage method according to an embodiment of this application.

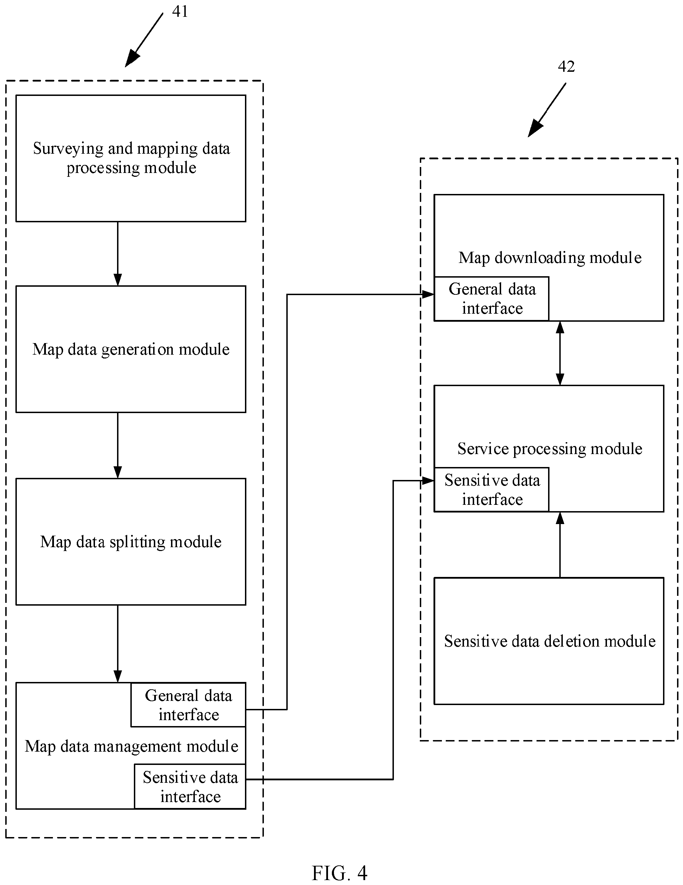

FIG. 4 shows a high-definition map generation system 41 according to some embodiments of this application. The high-definition map generation system 41 includes:
a surveying and mapping data processing module, configured to perform processing such as collection, desensitization, and extraction on original surveying and mapping data, where the original surveying and mapping data mainly includes position information, image and video information, point cloud data, and the like that are obtained based on a camera, a millimeter wave radar, a laser radar, a GPS, and the like, and a high-definition map may be comprehensively constructed based on the data;
a map data generation module, where the map data generation module and the surveying and mapping data processing module are communicatively connected, and the map data generation module is configured to: perform identification and classification processing on map elements such as a road, a lane line, traffic lights, a bridge, a tunnel, and a culvert based on a position, an image, and point cloud data, generate a storage structure of the map element based on a map storage specification, and generate a unique identifier ID for each map element; and
a map data splitting module, where the map data splitting module and the map data generation module are communicatively connected, and after the map data generation module generates the map element, the map data splitting module splits information of the map element to obtain general data and sensitive information. It should be understood that splitting is based on existing laws and regulations. If the laws and regulations change in the future, data that currently belongs to sensitive data may become general data after the change of the laws and regulations, and vice versa. A person skilled in the art can adjust a splitting basis in real time based on the change of the laws and regulations.

For a same map element, sensitive data and general data obtained after splitting have a same identifier ID. For example, for a bridge, a bridge structure is described in an original map element by using a plurality of plane data structures. Description of a vertical plane includes height information of the bridge. Therefore, a vertical plane of the bridge needs to be split and saved, for example (modifying an NDS storage structure is used as an example):

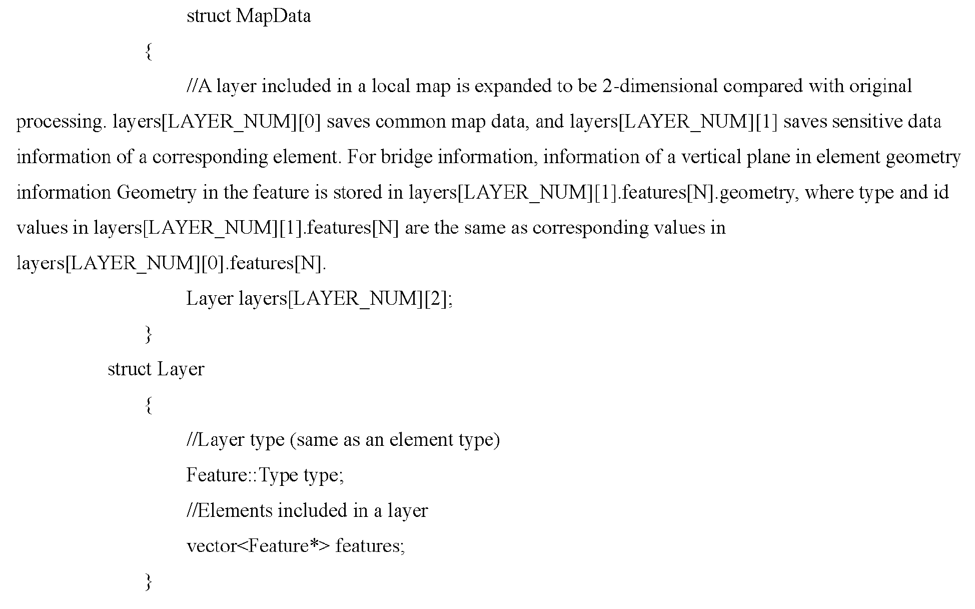

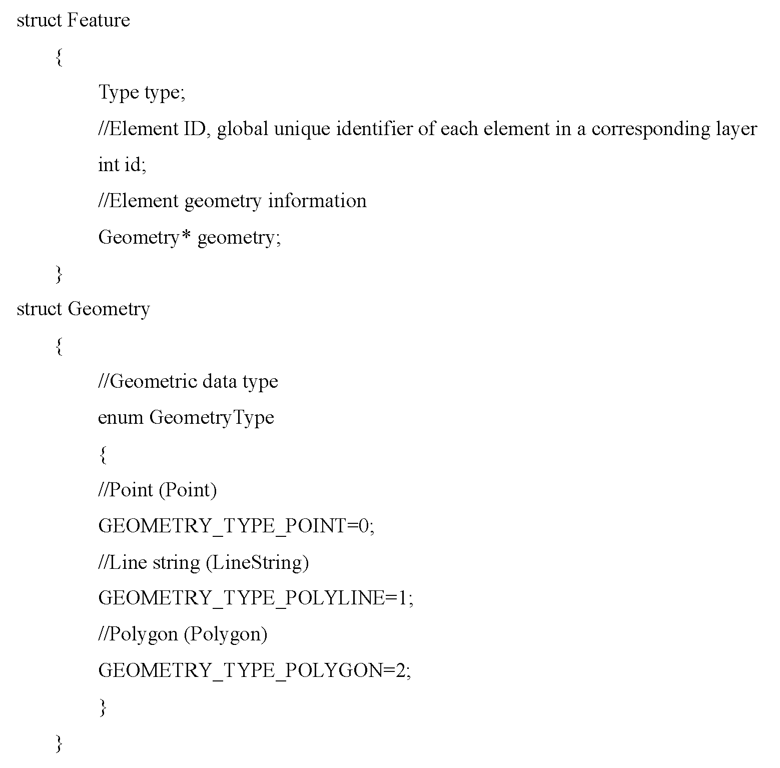

There is a map data management module, and the map data management module is communicatively connected to the map data splitting module and configured to store map data and provide a data query interface to the outside. The map data management module includes a general data interface and a sensitive data interface. The general data interface is configured to provide general data to the outside, and the sensitive data interface is configured to provide sensitive data to the outside. In some embodiments, the sensitive data interface may be, for example, an SDK (Software Development Kits).

The sensitive data interface provides a capability of single-interface output to prevent a user from obtaining sensitive data in batches to form a sensitive data band. For the provided sensitive data interface, single-interface output provides sensitive data output of a single-point object. The single-point object refers to a single specific object/map element on a high-definition map, such as a specific bridge or tunnel. Examples of interface parameters are as follows:

| Parameter | Description |
|---|---|
| Request parameter: ID, target data category | Map element ID, a unique identifier used in a high-definition map to represent a map element; |
| | Target data category: a category of target (sensitive) data that needs to be obtained, such as a height or a gradient; |
| Return value: Feature | Return sensitive data of a specified map element |

The map data management module may store the general data and the sensitive data on a dedicated server side, such as a dedicated server or a dedicated cloud, or store the general data and the sensitive data on a common server side and a dedicated server side, respectively.

FIG. 4 further shows a schematic diagram of a usage side/service party 42 used to invoke a high-definition map. The usage side/service party 42 includes:
a map downloading module, where the map downloading module includes a general data interface, when the usage side needs map data, general data may be obtained from, for example, the high-definition map generation system 41 by using the general data interface, and for example, in FIG. 4, the map downloading module may obtain the general data from the map data management module through communicatively connecting the general data interfaces of the map downloading module and the map data management module; and
a service processing module, where the service processing module includes a sensitive data interface, and the usage side determines, based on a real-time service such as navigation positioning and path planning, sensitive data that currently needs to be used. FIG. 4 is still used as an example. For example, currently an autonomous vehicle is about to pass across a bridge, and a height (height data of the bridge is sensitive data) of the bridge needs to be obtained to determine whether the vehicle can pass across. Through communicatively connecting the sensitive data interfaces of the service processing module and the map data management module, the service processing module requests, from the map data management module based on a map element ID of the bridge and a target data category (height) of the bridge, to obtain the height data (sensitive data) of the bridge (a single-point object). The map data management module returns the height data of the bridge to the service processing module based on the map element ID.

After the usage side 42 finishes using the sensitive data (for example, the vehicle in the foregoing example passes across the bridge), a sensitive data deleting module deletes the sensitive data on the usage side 42, so that the usage side cannot have the sensitive data for a long time. In addition, because the sensitive data is deleted in a timely manner, there is no aggregated sensitive data band formed on the usage side 42, that is, the usage side cannot have a large amount of sensitive data in a same time period.

In some embodiments, the sensitive data interface may be an SDK (Software Development Kits).

In some embodiments, the sensitive data deleting module may be used cooperatively with the SDK so that the sensitive data can be controlled to be deleted from the high-definition map generation system 41.

It should be understood that the general data and the sensitive data may be transmitted by using a wireless network, or may be transmitted by using a wired network. This is not limited in this application.

In some embodiments, the usage side 42 may be an autonomous vehicle. In some other embodiments, the usage side 42 may be an intelligent terminal device, such as a mobile phone or a smart speaker.

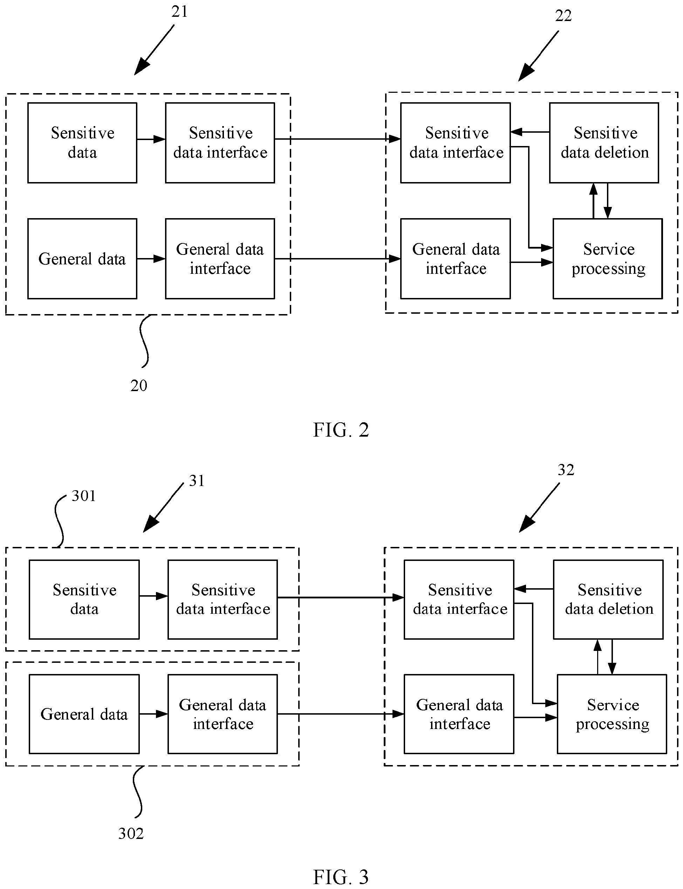

FIG. 2 is a schematic diagram of a high-definition map usage method based on some embodiments. A high-definition map provides a service for a service party 22 from a server side 21, the high-definition map includes general data and sensitive data, the general data and the sensitive data are both stored on a dedicated server side 20, and the dedicated server side 20 may include, for example, a dedicated server or a dedicated cloud. The dedicated server may be, for example, a server of a service provider authorized by a government regulatory authority. Similarly, the dedicated cloud may be a cloud service provided by a cloud computing service provider for the service provider authorized by the government regulatory authority.

The dedicated server side 20 further includes a general data interface and a sensitive data interface.

The service party 22 includes a general data interface and a sensitive data interface. The server side 21 may transmit general data to the service party 22 by using the general data interfaces that are communicatively connected. For sensitive data, a service processing module of the service party 22 requests, based on a real-time requirement (for example, navigation and path planning) and a map element ID, sensitive data of a required single-point object from the server side 21, and then obtains the sensitive data of the required single-point object from the server side 21 by using the sensitive data interfaces that are communicatively connected.

The service party 22 further includes a sensitive data deleting module. After the service party 22 finishes using the sensitive data, the sensitive data deleting module deletes the sensitive data on the service party 22, so that the service party cannot have the sensitive data for a long time. In addition, because the sensitive data is deleted in a timely manner, there is no aggregated sensitive data band formed on the service party 22, that is, the usage side cannot have a large amount of sensitive data in a same time period.

In some embodiments, the sensitive data interface may be an SDK (Software Development Kits).

In some embodiments, the sensitive data deleting module may be used cooperatively with the SDK so that the sensitive data can be controlled to be deleted from the server side 21.

FIG. 3 is a schematic diagram of a high-definition map usage method based on some embodiments. A high-definition map provides a service for a service party 32 from a server side 31, and the high-definition map includes general data and sensitive data. The general data is stored on a common server side 301, and the sensitive data is stored on a dedicated server side 302. The common server side 301 may be, for example, a common server or a public cloud/hybrid cloud. The dedicated server side 302 may include, for example, a dedicated server or a dedicated cloud. The dedicated server may be, for example, a server of a service provider authorized by a government regulatory authority. Similarly, the dedicated cloud may be a cloud service provided by a cloud computing service provider for the service provider authorized by the government regulatory authority.

The common server side 301 further includes a general data interface, and the dedicated server side 302 further includes a sensitive data interface.

The service party 32 includes a general data interface and a sensitive data interface. The server side 31 may transmit general data to the service party 32 by using the general data interfaces that are communicatively connected. For sensitive data, a service processing module of the service party 32 requests, based on a real-time requirement (for example, navigation and path planning) and a map element ID, sensitive data of a required single-point object from the server side 31, and then obtains the sensitive data of the required single-point object from the server side 31 by using the sensitive data interfaces that are communicatively connected.

The service party 32 further includes a sensitive data deleting module. After the service party 32 finishes using the sensitive data, the sensitive data deleting module deletes the sensitive data on the service party 32, so that the service party cannot have the sensitive data for a long time. In addition, because the sensitive data is deleted in a timely manner, there is no aggregated sensitive data band formed on the service party 22, that is, the usage side cannot have a large amount of sensitive data in a same time period.

In some embodiments, the sensitive data interface may be an SDK (Software Develop Kits).

In some embodiments, the sensitive data deleting module may be used cooperatively with the SDK so that the sensitive data can be controlled to be deleted from the server side 21.

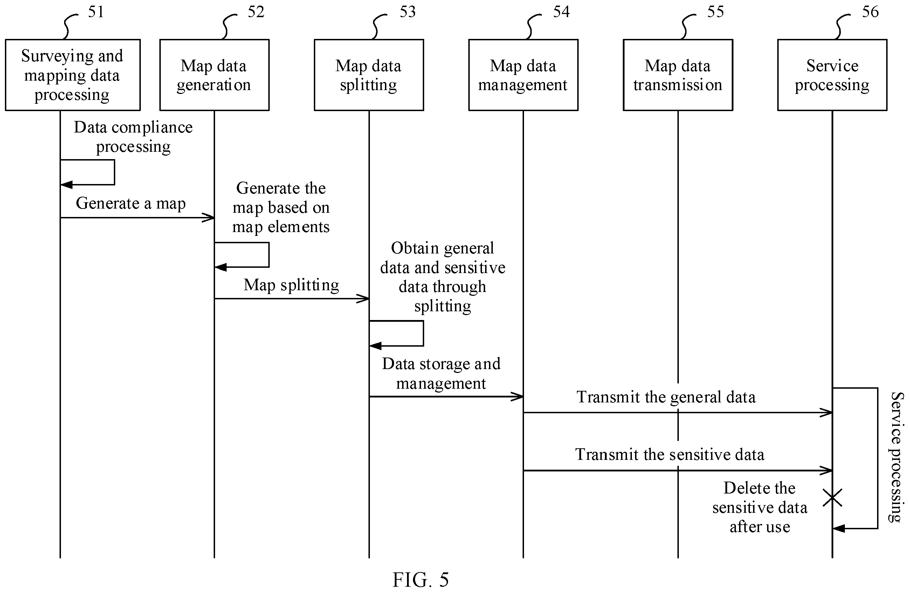

FIG. 5 is a flowchart of high-definition map production and service usage based on some embodiments.

In a process 51, process surveying and mapping data, which specifically includes: performing compliance processing on the surveying and mapping data. The surveying and mapping data mainly includes position information, image and video information, point cloud data, and the like that are obtained based on a camera, a millimeter wave radar, a laser radar, a GPS, and the like, and a high-definition map may be comprehensively constructed based on the data.

In a process 52, generate map data based on processed surveying and mapping data. Specifically, map elements such as a road, a lane line, traffic lights, a bridge, a tunnel, and a culvert are identified and classified based on a position, an image, and point cloud data, a storage structure of the map element is generated based on a map storage specification, and a unique identifier ID is generated for each map element.

In a process 53, split map data, that is, split the map data into general data and sensitive data based on the map element ID. For a same map element, general data and sensitive data have a same ID.

In a process 54, store split map data. In some embodiments, both the general data and the sensitive data may be stored on a dedicated server side, and the dedicated server side 20 may include, for example, a dedicated server or a dedicated cloud. The dedicated server may be, for example, a server of a service provider authorized by a government regulatory authority. Similarly, the dedicated cloud may be a cloud service provided by a cloud computing service provider for the service provider authorized by the government regulatory authority. In some other embodiments, the general data may be stored on a common server side, and the sensitive data is stored on a dedicated server side. The common server side may be, for example, a common server or a public cloud/hybrid cloud. The dedicated server side may include, for example, a dedicated server or a dedicated cloud. The dedicated server may be, for example, a server of the service provider authorized by the government regulatory authority. Similarly, the dedicated cloud may be a cloud service provided by a cloud computing service provider for the service provider authorized by the government regulatory authority.

In a process 55, transmit the map data. The map data is requested from a high-definition map server side based on a service processing requirement of a process 56, the map data includes general data and sensitive data, and the general data may be transmitted to a service party, for example, in a direct download manner. For the sensitive data, sensitive data of a required single-point object is requested from the high-definition map server side based on a real-time requirement (for example, navigation and path planning) for service processing and based on the map element ID.

In a process 56, after use of the sensitive data is finished, delete the sensitive data.

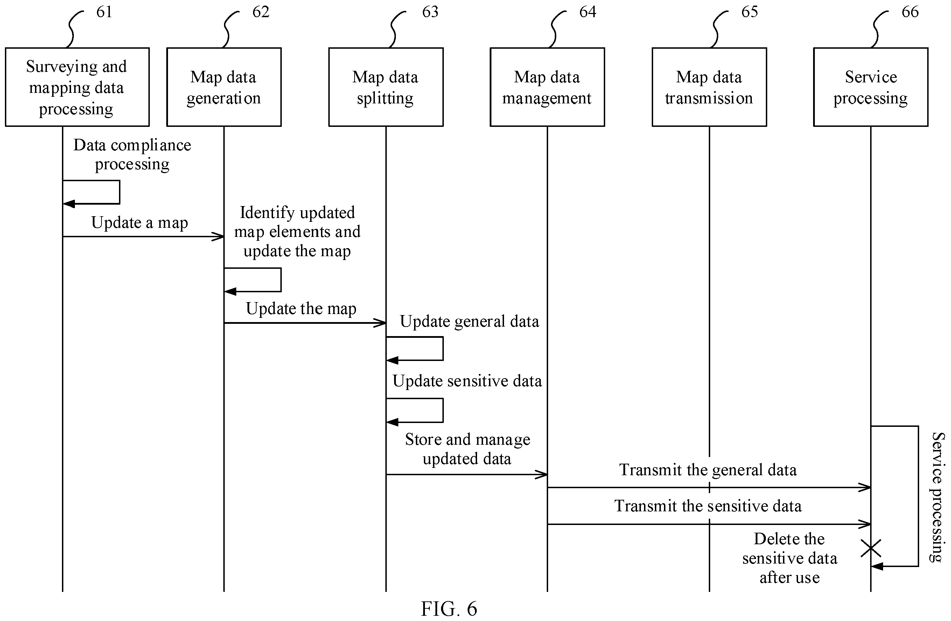

FIG. 6 is a flowchart of high-definition map updating and service usage based on some embodiments.

In a process 61, update surveying and mapping data, which specifically includes: performing compliance processing on updated surveying and mapping data. The surveying and mapping data mainly includes position information, image and video information, point cloud data, and the like that are obtained based on a camera, a millimeter wave radar, a laser radar, a GPS, and the like, and a high-definition map may be comprehensively constructed based on the data.

In a process 62, generate updated map data based on processed updated surveying and mapping data. Specifically, map elements such as a road, a lane line, traffic lights, a bridge, a tunnel, and a culvert are identified and classified based on a position, an image, and point cloud data, a storage structure of the map element is generated based on a map storage specification, and a unique identifier ID is generated for each map element.

In a process 63, split the updated map data, that is, split the map data into general data and sensitive data based on an updated map element ID. For a same map element, general data and sensitive data have a same ID.

In a process 64, store the split updated map data. In some embodiments, both the general data and the sensitive data may be stored on a dedicated server side, and the dedicated server side may include, for example, a dedicated server or a dedicated cloud. The dedicated server may be, for example, a server of a service provider authorized by a government regulatory authority. Similarly, the dedicated cloud may be a cloud service provided by a cloud computing service provider for the service provider authorized by the government regulatory authority. In some other embodiments, the general data may be stored on a common server side, and the sensitive data is stored on a dedicated server side. The common server side may be, for example, a common server or a public cloud/hybrid cloud. The dedicated server side may include, for example, a dedicated server or a dedicated cloud. The dedicated server may be, for example, a server of the service provider authorized by the government regulatory authority. Similarly, the dedicated cloud may be a cloud service provided by a cloud computing service provider for the service provider authorized by the government regulatory authority.

In a process 65, transmit the map data. The map data is requested from the high-definition map server side based on a service processing requirement of a process 66, the map data includes general data and sensitive data, and the general data may be transmitted to a service party, for example, in a direct download manner. For the sensitive data, sensitive data of a required single-point object is requested from a high-definition map server side based on a real-time requirement (for example, navigation and path planning) for service processing and based on the map element ID.

In a process 66, after use of the sensitive data is finished, delete the sensitive data.

Embodiments of this application provide a high-definition map generation method, a high-definition map generated according to the method, and a high-definition map usage method. In technical solutions of this application, a high-definition map is split into general data and sensitive data in a high-definition map generation process, and the general data and the sensitive data have a same map element ID, so that the high-definition map can be split by categories, and separately or collectively stored based on a split data type. The general data is obtained according to a general map data usage method. Single-point object output is provided for the sensitive data in the technical solutions of this application. A service party may request and obtain sensitive data of a single-point object based on a specific service requirement. After use of the sensitive data is finished, the sensitive data is deleted in a timely manner. Therefore, the service party cannot have the sensitive data for a long time, and cannot have a large amount of sensitive data in a same time period. According to the technical solutions of this application, a law compliance problem of using high-definition map data in the autonomous driving field can be resolved, which greatly facilitates popularization and application of the high-definition map in the autonomous driving field.

In this specification, the claims, and the accompanying drawings of this application, terms "first", "second", "third", "fourth", and the like (if existent) are intended to distinguish between similar objects but do not necessarily indicate a specific order or sequence. It should be understood that the data used in such a way are interchangeable in appropriate circumstances, so that embodiments described herein can be implemented in an order other than the content illustrated or described herein. In addition, terms such as "include", "have", and any variations thereof are intended to cover non-exclusive inclusions, for example, a process, method, system, product, or device that includes a series of steps or units is not necessarily limited to those clearly listed steps or units, but may include other steps or units that are not clearly listed or inherent to such a process, method, product, or device.

It may be clearly understood by a person skilled in the art that, for the purpose of convenient and brief description, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in other manners. For example, the foregoing apparatus embodiments are merely examples. For example, division into the units is merely logical service division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions of embodiments.

In addition, service units in embodiments of this application may be integrated into one processing unit, each of the units may exist alone physically, or two or more units may be integrated into one unit. The integrated unit may be implemented in a form of hardware, or may be implemented in a form of a software service unit.

When the integrated unit is implemented in a form of a software service unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

A person skilled in the art should be aware that in the foregoing one or more examples, services described in this application may be implemented by hardware, software, firmware, or any combination thereof. When the services are implemented by software, the foregoing services may be stored in a computer-readable medium or transmitted as one or more instructions or code in a computer-readable medium. The computer-readable medium includes a computer storage medium and a communication medium. The communication medium includes any medium that facilitates transmission of a computer program from one place to another The storage medium may be any available medium accessible to a general-purpose or dedicated computer.

The foregoing specific implementations further describe in detail objectives, technical solutions, and beneficial effects of this application. It should be understood that the foregoing is merely a specific implementation of this application.

The foregoing embodiments are merely intended for describing the technical solutions of this application, but not for limiting this application. Although this application is described in detail with reference to the foregoing embodiments, a person of ordinary skill in the art should understand that modifications to the technical solutions recorded in the foregoing embodiments or equivalent replacements to some technical features thereof may still be made, without departing from the scope of the technical solutions of embodiments of this application.

## Claims

1. A high-definition map usage method, comprising:
splitting high-definition map data into general data and sensitive data, wherein the general data comprises data that can be disclosed according to the law, and the sensitive data comprises data that cannot be disclosed according to the law;
storing the sensitive data on a dedicated server side, wherein the dedicated server side comprises a server authorized by a regulatory authority and a cloud service authorized by the regulatory authority;
when receiving a request from a service party, transmitting the general data to the service party, and if the request from the service party comprises a request for the sensitive data, transmitting sensitive data of a single-point object to the service party, wherein the single-point object comprises a single map element on a high-definition map; and
deleting the sensitive data from the service party after the service party finishes using the sensitive data.

2. The method according to claim 1, wherein
the sensitive data comprises geographical information that is a state secret and that is stipulated by the law.

3. The method according to claim 1, wherein
the map element comprises an identifier ID, and the service party requests the sensitive data of the single-point object based on the identifier ID of the map element.

4. The method according to any one of claims 1 to 3, wherein
the service party comprises a vehicle and a mobile terminal.

5. A high-definition map usage method, comprising:
requesting high-definition map data from a server side, wherein the high-definition map data comprises general data and sensitive data, the general data comprises data that can be disclosed according to the law, and the sensitive data comprises data that cannot be disclosed according to the law; and the server side comprises a dedicated server side, the dedicated server side comprises a server authorized by a regulatory authority and a cloud service authorized by the regulatory authority, and the dedicated server side is configured to store the sensitive data;
receiving the genera; data from the server side, and receiving the sensitive data from the dedicated server side; and
deleting the sensitive data after use of the sensitive data is finished.

6. The method according to claim 5, wherein
the sensitive data comprises geographical information that is a state secret and that is stipulated by the law.

7. The method according to claim 5 or 6, wherein
the map element comprises an identifier ID, and a service party requests sensitive data of a single-point object based on the identifier ID of the map element.

8. A high-definition map generation system, comprising:
a surveying and mapping data processing module, wherein the surveying and mapping data processing module is configured to process original surveying and mapping data to obtain processed surveying and mapping data;
a map data generation module, wherein the map data generation module is configured to generate a map element based on the processed surveying and mapping data, and each map element comprises a unique identifier ID corresponding to the map element;
a map data splitting module, wherein the map data splitting module is configured to split data of the map element into general data and sensitive data based on the identifier ID of the map element; and
a map data management module, wherein the map data management module is configured to provide single-interface output for the sensitive data in the map element.

9. The high-definition map generation system according to claim 8, wherein
the map data management module further comprises a general data interface configured to output the general data.

10. The high-definition map generation system according to claim 8, wherein
the single-interface output comprises an SDK.

11. A high-definition map invocation system, comprising:
a map downloading module, wherein the map downloading module is configured to download general data, the general data comprises data that can be disclosed according to the law, and the map downloading module comprises a general data interface configured to obtain the general data;
a service processing module, wherein the service processing module is configured to determine required sensitive data based on a navigation plan, the sensitive data comprises data that cannot be disclosed according to the law, and the service processing module comprises a sensitive data interface configured to obtain the sensitive data; and
a sensitive data deleting module, wherein the sensitive data deleting module is communicatively connected to the service processing module, and the sensitive data deleting module is configured to delete the sensitive data after use of the sensitive data is finished.

12. The high-definition map invocation system according to claim 11, wherein
the system is disposed on an autonomous vehicle.

13. A high-definition map, comprising:
a plurality of map elements, wherein each of the plurality of map elements comprises an ID corresponding to the map element, at least one of the plurality of map elements comprises general data and sensitive data, the general data comprises data that can be disclosed according to the law, the sensitive data comprises data that cannot be disclosed according to the law, and general data and sensitive data in a same map element have a same identifier ID.

14. The high-definition map according to claim 13, wherein
the general data and the sensitive data are configured to be stored in a split manner.

15. The high-definition map according to claim 14, wherein
both the general data and the sensitive data are stored on a dedicated server side, and the dedicated server side comprises a dedicated server authorized by a regulatory authority and a dedicated cloud authorized by the regulatory authority.

16. The high-definition map according to any one of claims 13 to 15, wherein
the general data is stored on a common server side, and the common server side comprises at least one of a common server and a public cloud; and
the sensitive data is stored on the dedicated server side, and the dedicated server side comprises at least one of the dedicated server and the dedicated cloud.
